# FASCICULE DE BREVET EUROPEEN

(11) **EP 3 237 257 B1**
(45) Date de publication et mention de la délivrance du brevet: **09.02.2022**
(21) Numéro de dépôt: 15808161.2
(22) Date de dépôt: 10.12.2015
(51) Int. Cl.: B60W 10/02, B60W 30/18, B60W 30/20

(54) **PROCÉDÉ DE PASSAGE AUTOMATIQUE D'UN VÉHICULE AUTOMOBILE EN MODE ROUE LIBRE**
VERFAHREN ZUR AUTOMATISCHEN SCHALTUNG EINES KRAFTFAHRZEUGES IN DEN FREILAUFMODUS
METHOD FOR AUTOMATICALLY SWITCHING A MOTOR VEHICLE TO FREEWHEEL MODE

(30) Priorité: 23.12.2014 FR 1463182
(43) Date de publication de la demande: 01.11.2017
(73) Titulaire: Renault S.A.S., 92100 Boulogne (FR); Getrag Ford Transmissions GmbH, 50735 Köln (DE)
(72) Inventeur: PLANCHE, Grégory, 91400 Orsay (FR); NODIN, Bertrand, 91430 Igny (FR); MORENO LAHORE, Pedro, 75013 Paris (FR); SCHMITZ, Harald, 44225 Dortmund (DE); PRENGER-BERNINGHOFF, Axel, 41812 Erkelenz (DE)
(74) Mandataire: Gevers & Orès
(86) Numéro de dépôt international: PCT/EP2015/079219
(87) Numéro de publication internationale: WO 2016/102188

(56) Documents cités:
- EP-A1- 2 374 678
- WO-A1-2013/190653
- DE-A1-102012 212 230
- FR-A1- 2 824 790
- FR-A1- 3 005 021
- US-A1- 2014 221 156

## Description

### DOMAINE TECHNIQUE DE L'INVENTION

L'invention concerne un procédé de commande automatique d'un véhicule automobile pour le passage d'un mode "normal" vers un mode "roue libre", le véhicule comportant un moteur susceptible de fournir un couple moteur à des roues motrices par l'intermédiaire d'un dispositif d'embrayage commandé automatiquement qui comporte un arbre menant et un arbre mené, en mode "normal" les roues motrices étant accouplées aussi souvent que possible avec le moteur via le dispositif d'embrayage, en mode "roue libre" les roues motrices étant découplées en permanence du moteur par débrayage du dispositif d'embrayage pour permettre au moteur de tourner à un régime ralenti tant qu'aucun ordre de freinage ou d'accélération n'est requis par le conducteur.

Le document DE102012212230 décrit un procédé de passage automatique d'un véhicule automobile en mode roue libre. Dans ce document, seulement le passage du mode roue libre vers le mode normal est détaillé.

### ARRIERE PLAN TECHNIQUE DE L'INVENTION

Les véhicules automobiles mus par un moteur à combustion comportent généralement une boîte de vitesses, manuelle ou automatique, qui est interposées dans la chaîne de transmission du couple moteur jusqu'à des roues motrices du véhicule. Pour permettre de changer la vitesse du véhicule, il est généralement nécessaire de découpler le moteur de la boîte de vitesses, notamment au moyen d'un dispositif d'embrayage. Dans un mode de fonctionnement dit "normal" du véhicule, le dispositif embrayage occupe aussi souvent que possible sa position embrayée. Le dispositif d'embrayage est généralement débrayée temporairement uniquement pendant les opérations de changement de vitesse ou encore lorsque le véhicule est à l'arrêt.

Il est bien connu que les véhicules automobiles consomment moins de carburant lorsqu'ils roulent en "roue libre", c'est-à-dire lorsqu'ils utilisent uniquement leur énergie cinétique et éventuellement leur poids pour rouler aussi loin que possible sans que le moteur n'exerce un couple de freinage, aussi appelé "frein moteur" sur les roues du véhicule.

On connaît déjà un procédé de commande du passage du véhicule du mode "normal" jusqu'au mode "roue libre". Dans ce procédé de commande selon l'état de la technique, dès que les conditions sont réunies pour que le véhicule puisse poursuivre sa route sans l'aide du moteur, le dispositif d'embrayage est commandé en position débrayée, et le régime du moteur est réduit à un régime ralenti voire nul. Un tel procédé est satisfaisant en ce qu'il permet d'économiser du carburant.

Néanmoins, l'ouverture brutale du dispositif d'embrayage provoque une sensation de décélération brutale pour les passagers du véhicule.

En outre, lorsque le conducteur du véhicule décide de revenir en mode "normal" alors que le véhicule vient tout juste de passer en mode "roue libre", le dispositif d'embrayage revient brutalement en position embrayée tandis que le moteur tourne en régime ralenti voire nul. Ceci provoque donc un à-coup pour les passagers du véhicule.

Cet à-coup peut être évité à condition d'attendre que le moteur retrouve un régime correspondant à la vitesse de rotation des roues du véhicule. Un tel délai peut être handicapant dans certaines situation, surtout lorsque le passage vers le mode "roue libre" a été réalisé de manière automatique et contre la volonté du conducteur.

### BREF RESUME DE L'INVENTION

Pour remédier à ces problèmes, l'invention propose un procédé du type décrit précédemment, caractérisé en ce qu'une étape de transition est interposée chronologiquement entre le mode "normal" et le mode "roue libre" durant laquelle le moteur est commandé automatiquement de manière que l'arbre mené et l'arbre menant tournent à la même vitesse sans transmission de couple aux roues motrices.

Selon d'autres caractéristiques de l'invention :
- lors de l'étape de transition, le dispositif d'embrayage demeure en position embrayée ;
- lors de l'étape de transition, le dispositif d'embrayage est commandé en position débrayée ;
- lors de l'étape de transition, le dispositif d'embrayage est commandé dans une position de patinage ;
- l'étape de transition est déclenchée lorsque l'accélération requise par le conducteur est inférieure à une valeur déterminée et lorsque le couple moteur transmis à l'arbre mené par le dispositif d'embrayage est inférieur ou égal à un couple de déclenchement déterminé ;
- le couple de déclenchement est positif ;
- le couple de déclenchement est nul ;
- le couple de déclenchement est négatif ;
- le déclenchement de l'étape de transition est reporté d'un délai déterminé lorsqu'une vitesse d'une boîte de vitesses du véhicule est en cours de changement ;
- le mode "roue" libre" est déclenché lorsqu'aucune accélération ni aucun freinage n'a été requis par le conducteur pendant l'étape de transition avant la fin d'un délai de temporisation déterminé ;
- le véhicule est équipé d'une boîte de vitesses commandée automatiquement, la vitesse à engager étant commandée en fonction de la vitesse de déplacement du véhicule de manière qu'en cas d'interruption du mode "roue libre" aucun changement de vitesse ne soit requis lors du passage en position embrayée du dispositif d'embrayage ;
- l'étape de transition et le mode "roue libre" sont susceptibles d'être interrompus à tout moment lorsqu'une accélération ou un freinage est requis par le conducteur ;
- l'étape de transition et le mode "roue libre" sont susceptibles d'être interrompus à tout moment lorsque la vitesse de déplacement du véhicule devient inférieure à une vitesse déterminée ou lorsqu'une action de changement de vitesse est requise manuellement par le conducteur.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue schématique qui représente un moteur de véhicule automobile et une chaîne de transmission de couple jusqu'à une roue motrice du véhicule, la chaîne de transmission comportant une boîte de vitesses et un dispositif d'embrayage ;
- la figure 2 représente schématiquement deux unités électroniques de commande associée respectivement au moteur et à la chaîne de transmission ;
- la figure 3 est un schéma-bloc qui représente le procédé réalisé selon les enseignements de l'invention ;
- la figure 4 est un diagramme qui illustre la diminution du couple moteur transmis à l'arbre mené par le dispositif d'embrayage en position embrayée lorsque la pédale d'accélérateur vient d'être relâchée après avoir été enfoncée.

### DESCRIPTION DETAILLEE DES FIGURES

Dans la suite de la description, des éléments présentant une structure identique ou des fonctions analogues seront désignés par des mêmes références.

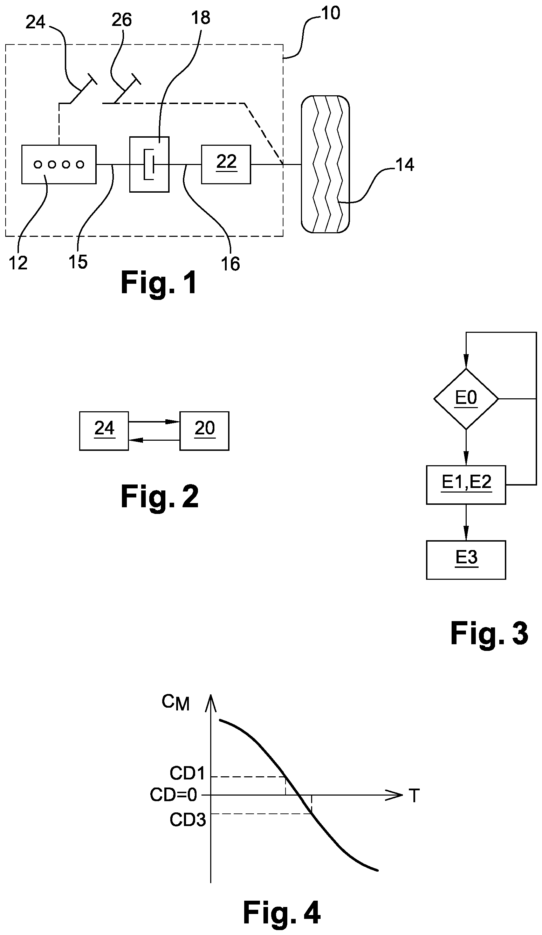

On a représenté schématiquement à la figure 1 un véhicule automobile 10 qui est mû par un moteur 12 à combustion interne produisant un couple moteur.

En variante, le véhicule est mû par un moteur électrique ou par un moteur hybride.

Le moteur 12 est destiné à entraîner au moins une roue 14 motrice du véhicule 10 par l'intermédiaire d'une chaîne de transmission du couple moteur.

La chaîne de transmission comporte un arbre 15 menant qui est entraîné en rotation directement par le moteur 12. L'arbre 15 menant est susceptible d'être accouplé à un arbre mené 16 par l'intermédiaire d'un dispositif 18 d'embrayage commandé automatiquement.

Il s'agit ici d'un dispositif 18 d'embrayage à friction qui est commandé par une première unité 20 électronique de commande représentée à la figure 2. De nombreux exemples de réalisation de tels dispositifs sont bien connus de l'état de la technique.

Le dispositif 18 d'embrayage est susceptible d'être commandé entre :
- une première position extrême embrayée dans laquelle l'arbre 15 menant et l'arbre 16 mené sont accouplés, la totalité du couple moteur étant transmise à l'arbre 16 mené ;
- une deuxième position extrême de débrayage dans laquelle l'arbre 15 menant et l'arbre 16 mené sont découplés, l'arbre 15 menant et l'arbre 16 mené étant alors susceptibles de tourner à des vitesses différentes sans interaction de l'un avec l'autre.

A titre non limitatif, le dispositif 18 d'embrayage représenté à la figure 1 est aussi susceptible d'occuper une position intermédiaire de patinage dans laquelle seule une partie du couple moteur est transmise à l'arbre 16 mené.

L'arbre 16 mené est accouplé à la roue 14 motrice par l'intermédiaire d'une boîte 22 de vitesses. Il s'agit ici d'une boîte 22 de vitesses automatique ou robotisée qui est commandée par ladite première unité 20 électronique de commande représentée à la figure 2.

En variante non représentée de l'invention, la boîte de vitesses est formée par une boîte de vitesses manuelle.

Le régime du moteur 12 est susceptible d'être commandé par le conducteur du véhicule, par exemple par l'intermédiaire d'une pédale 24 d'accélérateur.

Le régime du moteur 12 est de plus susceptible d'être commandé automatiquement par une deuxième unité 24 électronique de commande qui est représentée à la figure 2.

En outre, le conducteur du véhicule est susceptible de freiner le véhicule en agissant sur un système de freinage par l'intermédiaire d'une pédale 26 de freinage.

Le véhicule 10 est susceptible de fonctionner selon un mode dit "normal" dans lequel la roue 14 motrice est accouplée aussi souvent que possible avec le moteur 12. Les seules circonstances dans lesquelles le dispositif 18 d'embrayage est commandé en position débrayée interviennent le temps du changement d'une vitesse de la boîte 22 de vitesses.

Le véhicule 10 est aussi susceptible d'être commandé vers un mode de fonctionnement dit en "roue libre" dans lequel le dispositif 18 d'embrayage est commandé par la première unité 20 électronique de commande vers sa position débrayée et dans lequel le moteur 12 est commandé par la première unité 20 électronique de commande pour tourner à un régime bas relativement à la vitesse de déplacement du véhicule, par exemple à un régime de ralenti. Un tel mode "roue libre" est déjà connu sous l'appellation anglo-saxonne "sailing mode". Les conditions de passage automatique en mode "roue libre" seront détaillées par la suite.

En mode "roue libre", le véhicule 10 continu ainsi à se déplacer sous l'effet de son énergie cinétique propre, à laquelle vient s'additionner la gravité lorsque le véhicule descend une route en pente. Ce mode permet d'économiser du carburant en réduisant le régime du moteur 12. Le véhicule 10 est susceptible de continuer à rouler en mode "roue libre" d'autant plus longtemps que le couple de freinage procuré par les frottement internes du moteur 12, aussi appelé "frein moteur", n'est pas transmis aux roues 14 motrices car le dispositif 18 d'embrayage occupe sa position débrayée.

Le procédé de commande automatique du passage du mode "normal" vers le mode "roue libre" est à présent décrit en référence à la figure 3.

Une première étape "E1" de transition est interposée chronologiquement entre le mode "normal" et le mode "roue libre"

Le déclenchement de l'étape "E1" de transition est soumis au moins aux deux conditions de déclenchement suivantes :
- l'accélération requise par le conducteur est inférieure à une valeur déterminée ; et
- le couple moteur transmis à l'arbre 16 mené par le dispositif 18 d'embrayage est inférieur ou égal à un couple de déclenchement déterminé.

En variante, on ajoutera à ces deux premières conditions de déclenchement, au moins l'une des conditions de déclanchement suivantes :
- aucun freinage n'est requis par le conducteur ;
- la boîte de vitesse est en mode automatique, afin d'éviter que le conducteur n'enclenche des vitesses inadaptées pour le retour au mode "normal" à l'issue du mode "roue libre" ;
- la vitesse de déplacement du véhicule est comprise dans une plage déterminée, afin d'éviter que le véhicule ne prenne trop de vitesse, ou au contraire pour éviter que le véhicule ne s'arrête ;
- la pente de la route, dans le sens de la descente, est inférieure à un seuil déterminé, afin d'éviter que le véhicule ne prenne trop de vitesse en mode "roue libre" ;
- l'accélération latérale du véhicule est inférieure à un seuil déterminé, afin d'éviter le déclenchement du mode "roue libre" dans des virages trop serrés.

La totalité des conditions de déclenchement sélectionnées doivent être satisfaites simultanément pour que l'étape "E1" de transition soit déclenchée. Sinon, le véhicule 10 demeure en mode "normal". Ces conditions sont vérifiées lors d'une étape préliminaire "E0" de vérification.

L'accélération requise est par exemple déterminée par le degré d'enfoncement de la pédale 24 d'accélérateur. En ce cas, lorsque le degré d'enfoncement de la pédale 24 d'accélérateur est inférieur à une valeur déterminée, on estime que la première condition de déclenchement de l'étape "E1" de transition est remplie.

Concernant la deuxième condition de déclenchement, lorsque la pédale 24 d'accélérateur est relâchée au-dessous de la valeur déterminée après avoir été enfoncée plus fortement, le couple produit par le moteur 12 subit une diminution. Comme représenté à la figure 4, le couple moteur "CM" transmis à l'arbre 16 mené par l'intermédiaire du dispositif 18 d'embrayage en position embrayée commence en effet à diminuer pour s'approcher de zéro. Lorsque la pédale 24 d'accélérateur est complètement relâchée par le conducteur, le couple moteur est susceptible de devenir négatif. Ce dernier cas illustre l'effet de "frein moteur" dans lequel le moteur 12 ne produit plus aucun couple moteur, et dans lequel les frottements internes du moteur 12 ont tendances à produire un couple négatif qui s'oppose à la rotation de l'arbre 16 mené.

Selon un premier mode de réalisation de l'invention, le couple de déclenchement "CD1" déterminé est positif. En d'autres termes, la deuxième condition de déclenchement de l'étape "E1" est satisfaite lorsqu'un couple moteur est effectivement transmis à l'arbre 16 mené. Ce couple moteur est par exemple légèrement supérieur à zéro.

Selon un deuxième mode de réalisation de l'invention, le couple de déclenchement "CD2" déterminé est nul. En d'autres termes, la deuxième condition de déclenchement de l'étape "E1" est satisfaite lorsqu'aucun couple, positif ou négatif, n'est transmis à l'arbre 16 mené.

Selon un troisième mode de réalisation de l'invention, le couple de déclenchement "CD3" déterminé est négatif. En d'autres termes, la deuxième condition de déclenchement de l'étape "E1" est satisfaite lorsque l'arbre 16 mené commence à subir les effets du frein moteur. En ce cas, le conducteur du véhicule est susceptible de sentir un à-coup lors de l'étape "E1" de transition comme cela sera expliqué par la suite.

Par ailleurs, lors de l'étape "E0" préalable de vérification, la deuxième unité 20 électronique de commande vérifie qu'aucune opération de changement de vitesse n'est en cours. Lorsqu'une opération de changement de vitesse de la boîte 22 de vitesses du véhicule 10 est en cours tandis que toutes les autres conditions de déclenchement sont satisfaites, le déclenchement de l'étape "E1" de transition est reporté d'un délai déterminé suffisant pour achever le changement de vitesse.

Lorsque toutes les conditions de déclenchement sont satisfaites lors de l'étape "E0" préalable, l'étape "E1" de transition est déclenchée. Au cours de cette étape "E1" de transition, le moteur 12 est commandé automatiquement de manière que l'arbre 16 mené et l'arbre 15 menant tournent à la même vitesse sans transmission de couple moteur aux roues 14 motrices.

Pour éviter qu'un couple moteur ne soit transmis aux roues 14 motrices, plusieurs variantes sont envisageables.

Selon une première variante, lors de l'étape "E1" de transition, le dispositif 18 d'embrayage demeure en position embrayée. Le moteur 12 est alors commandé de manière qu'aucun couple moteur, ni aucun couple de freinage ne soit transmis à l'arbre 16 mené par l'arbre 15 menant. Cette variante de réalisation présente l'avantage de permettre au moteur 12 de reprendre très rapidement le contrôle de la vitesse de rotation des roues 14 motrices sans à-coup pour le conducteur.

Selon une deuxième variante, lors de l'étape "E1" de transition, le dispositif 18 d'embrayage est commandé en position débrayée. Dans ce cas, aucun couple moteur, ni aucun couple de freinage n'est naturellement transmis à l'arbre 16 mené par l'arbre 15 menant. Cette variante nécessite un modèle de commande du moteur 12 plus simple que dans la première variante. Il suffit en effet de mesurer la vitesse de rotation de l'arbre 16 mené et de commander le moteur 12 pour que l'arbre 15 menant tourne à la même vitesse.

Selon une troisième variante, lors de l'étape "E1" de transition, le dispositif 18 d'embrayage est commandé dans une position de patinage. Cette variante est une solution intermédiaire entre la première variante et la deuxième variante. Cette troisième variante permet en effet au moteur 12 de reprendre très rapidement le contrôle de la vitesse de rotation des roues 14 motrices car les éléments frottant du dispositif 18 d'embrayage sont toujours en contact. De plus cette troisième variante permet d'introduire une certaine tolérance de commande du moteur puisque le couple, moteur ou de freinage, éventuellement transmis à l'arbre 16 mené est réduit.

Cette étape "E1" de transition est maintenue durant un délai de temporisation déterminé

Lors d'une étape "E2" de vérification qui se déroule simultanément à l'étape "E1" de transition, on vérifie qu'aucune accélération et aucun freinage n'ont été requis par le conducteur pendant l'étape de transition avant la fin du délai de temporisation déterminé.

Si un freinage ou une accélération ont été requis, le procédé de passage en mode "roue libre" est interrompu et le véhicule est automatiquement commandé en mode "normal.

Si toutes les conditions de l'étape "E2" de vérification sont satisfaites, le mode "roue" libre" est déclenché lors d'une troisième étape "E3" suivante.

Durant cette troisième étape "E3", le dispositif 18 est commandé vers sa position débrayée si cela n'était pas encore le cas. Le moteur 12 est commandé par l'unité 24 électronique de commande vers un régime de ralenti, aussi appelé "idle" en anglais. Cette troisième étape "E3" permet ainsi au véhicule de rouler en économisant du carburant grâce à son énergie cinétique et, éventuellement grâce à son énergie potentielle en cas de descente.

Durant cette troisième étape "E3" de "roue libre", la boîte 22 de vitesse est commandée de manière que les opérations de changement de vitesse soient automatiquement réalisées pour engager une vitesse correspondant à la vitesse de déplacement du véhicule. Ainsi, en cas d'interruption du mode "roue libre" aucun changement de vitesses n'est requis lors du passage en position embrayée du dispositif 18 d'embrayage.

Le procédé, et notamment l'étape "E1" de transition et le mode "roue libre", est susceptible d'être interrompu à tout moment lorsqu'une accélération ou un freinage est requis par le conducteur.

En outre, le procédé, et notamment l'étape "E1" de transition et le mode "roue libre", sont susceptibles d'être interrompus à tout moment lorsque la vitesse de déplacement du véhicule devient inférieure à une vitesse déterminée ou lorsqu'une action de changement de vitesse est requise manuellement par le conducteur.

Le procédé réalisé selon les enseignements de l'invention permet ainsi de réaliser de manière progressive le passage en mode "roue libre" en passant par une étape "E1" de transition qui permet un retour quasi instantané du véhicule en mode "normal" du fait que le moteur 12 tourne toujours à un régime proche de celui de l'arbre 16 mené. Un tel procédé est notamment avantageux lorsque le passage en mode "roue libre" est effectué automatiquement tandis que le conducteur estime que le profil de la route et/ou les conditions de circulation ne sont pas adaptés à un tel mode.

De plus, le passage en mode "roue libre" après un durée de temporisation déterminée permet tout de même d'économiser beaucoup de carburant lorsque le conducteur estime que le profil de la route et/ou les conditions de circulation sont adaptés à un tel mode.

## Revendications

1. Procédé de commande automatique d'un véhicule (10) automobile pour le passage d'un mode "normal" vers un mode "roue libre", le véhicule (10) comportant un moteur (12) susceptible de fournir un couple moteur à des roues (14) motrices par l'intermédiaire d'un dispositif (18) d'embrayage commandé automatiquement qui comporte un arbre (15) menant et un arbre (16) mené, en mode "normal" les roues motrices étant accouplées aussi souvent que possible avec le moteur (12) via le dispositif (18) d'embrayage, en mode "roue libre" les roues (14) motrices étant découplées en permanence du moteur par débrayage du dispositif (18) d'embrayage pour permettre au moteur (12) de tourner à un régime ralenti tant qu'aucun ordre de freinage ou d'accélération n'est requis par le conducteur,
**caractérisé en ce qu'**une étape (E1) de transition est interposée chronologiquement entre le mode "normal" et le mode "roue libre" durant laquelle le moteur (12) est commandé automatiquement de manière que l'arbre (16) mené et l'arbre (15) menant tournent à la même vitesse sans transmission de couple aux roues (14) motrices.

2. Procédé selon la revendication 1, **caractérisé en ce que** lors de l'étape (E1) de transition, le dispositif (18) d'embrayage demeure en position embrayée.

3. Procédé selon la revendication 1, **caractérisé en ce que** lors de l'étape (E1) de transition, le dispositif (18) d'embrayage est commandé en position débrayée.

4. Procédé selon la revendication 1, **caractérisé en ce que** lors de l'étape (E1) de transition, le dispositif (18) d'embrayage est commandé dans une position de patinage.

5. Procédé selon l'une quelconque des revendications précédentes, **caractérisé en ce que** l'étape (E1) de transition est déclenchée lorsque l'accélération requise par le conducteur est inférieure à une valeur déterminée et lorsque le couple moteur transmis à l'arbre (16) mené par le dispositif (18) d'embrayage est inférieur ou égal à un couple de déclenchement déterminé.

6. Procédé selon la revendication précédente, **caractérisé en ce que** le couple de déclenchement est positif.

7. Procédé selon la revendication 5, **caractérisé en ce que** le couple de déclenchement est nul.

8. Procédé selon la revendication 5, **caractérisé en ce que** le couple de déclenchement est négatif.

9. Procédé selon l'une quelconque des revendications 5 à 8, **caractérisé en ce que** le déclenchement de l'étape (E1) de transition est reporté d'un délai déterminé lorsqu'une vitesse d'une boîte (22) de vitesses du véhicule est en cours de changement.

10. Procédé selon l'une quelconque des revendications précédentes, **caractérisé en ce que** le mode "roue" libre" est déclenché lorsqu'aucune accélération ni aucun freinage n'a été requis par le conducteur pendant l'étape (E1) de transition avant la fin d'un délai de temporisation déterminé.

11. Procédé selon l'une quelconque des revendications précédentes, **caractérisé en ce que** le véhicule (10) est équipé d'une boîte (22) de vitesses commandée automatiquement, la vitesse à engager étant commandée en fonction de la vitesse de déplacement du véhicule (10) de manière qu'en cas d'interruption du mode "roue libre" aucun changement de vitesse ne soit requis lors du passage en position embrayée du dispositif (18) d'embrayage.

12. Procédé selon l'une quelconque des revendications précédentes, **caractérisé en ce que** l'étape (E1) de transition et le mode "roue libre" sont susceptibles d'être interrompus à tout moment lorsqu'une accélération ou un freinage est requis par le conducteur.

13. Procédé selon l'une quelconque des revendications précédentes, **caractérisé en ce que** l'étape (E1) de transition et le mode "roue libre" sont susceptibles d'être interrompus à tout moment lorsque la vitesse de déplacement du véhicule devient inférieure à une vitesse déterminée ou lorsqu'une action de changement de vitesse est requise manuellement par le conducteur.

## Patentansprüche

1. Verfahren zur automatischen Steuerung eines Kraftfahrzeugs (10) für den Übergang von einem "normalen" Modus in einen "Freilauf"-Modus, wobei das Fahrzeug (10) einen Motor (12) umfasst, der mittels einer automatisch gesteuerten Kupplungsvorrichtung (18), die eine Antriebswelle (15) und eine angetriebene Welle (16) umfasst, ein Motordrehmoment an Antriebsräder (14) bereitstellen kann, wobei die Antriebsräder im "normalen" Modus so häufig wie möglich über die Kupplungsvorrichtung (18) mit dem Motor (12) gekoppelt sind, wobei die Antriebsräder (14) im "Freilauf"-Modus durch Entkopplung der Kupplungsvorrichtung (18) dauerhaft von dem Motor entkoppelt sind, um dem Motor (12) zu erlauben, bei einem verlangsamtem Betrieb zu drehen, solange von dem Fahrer kein Brems- oder Beschleunigungsvorgang erfordert wird,
**dadurch gekennzeichnet, dass** ein Übergangsschritt (E1) chronologisch zwischen dem "normalen" Modus und dem "Freilauf"-Modus eingefügt ist, während dem der Motor (12) derart automatisch gesteuert wird, dass die angetriebene Welle (16) und die Antriebswelle (15) sich in der gleichen Geschwindigkeit ohne Drehmomentübertragung an die Antriebsräder (14) drehen.

2. Verfahren nach Anspruch 1, **dadurch gekennzeichnet, dass** die Kupplungsvorrichtung (18) während des Übergangsschritts (E1) in eingekuppelter Position verbleibt.

3. Verfahren nach Anspruch 1, **dadurch gekennzeichnet, dass** die Kupplungsvorrichtung (18) während des Übergangsschritts (E1) in entkuppelter Position gesteuert wird.

4. Verfahren nach Anspruch 1, **dadurch gekennzeichnet, dass** die Kupplungsvorrichtung (18) während des Übergangsschritts (E1) in einer Schlupfposition gesteuert wird.

5. Verfahren nach einem der vorstehenden Ansprüche, **dadurch gekennzeichnet, dass** der Übergangsschritt (E1) ausgelöst wird, wenn die von dem Fahrer geforderte Beschleunigung geringer als ein bestimmter Wert ist und wenn das durch die Kupplungsvorrichtung (18) an die angetriebene Welle (16) übertragene Motordrehmoment geringer oder gleich einem bestimmten Auslösedrehmoment ist.

6. Verfahren nach dem vorstehenden Anspruch, **dadurch gekennzeichnet, dass** das Auslösedrehmoment positiv ist.

7. Verfahren nach Anspruch 5, **dadurch gekennzeichnet, dass** das Auslösedrehmoment null ist.

8. Verfahren nach Anspruch 5, **dadurch gekennzeichnet, dass** das Auslösedrehmoment negativ ist.

9. Verfahren nach einem der Ansprüche 5 bis 8, **dadurch gekennzeichnet, dass** die Auslösung des Übergangsschritts (E1) um einen bestimmten Zeitraum verschoben wird, wenn ein Gang eines Schaltgetriebes (22) des Fahrzeugs dabei ist, gewechselt zu werden.

10. Verfahren nach einem der vorstehenden Ansprüche, **dadurch gekennzeichnet, dass** der "Freilauf"-Modus ausgelöst wird, wenn während des Übergangschritts (E1) vor dem Ende eines bestimmten Verzögerungszeitraums von dem Fahrer weder eine Beschleunigung noch eine Bremsung gefordert wurde.

11. Verfahren nach einem der vorstehenden Ansprüche, **dadurch gekennzeichnet, dass** das Fahrzeug (10) mit einem automatisch gesteuerten Schaltgetriebe (22) ausgestattet ist, wobei der einzulegende Gang derart in Abhängigkeit von der Bewegungsgeschwindigkeit des Fahrzeugs (10) gesteuert wird, dass im Falle einer Unterbrechung des "Freilauf"-Modus kein Gangwechsel beim Übergang zu einer eingekuppelten Position der Kupplungsvorrichtung (18) erforderlich wird.

12. Verfahren nach einem der vorstehenden Ansprüche, **dadurch gekennzeichnet, dass** der Übergangsschritt (E1) und der "Freilauf"-Modus jederzeit unterbrochen werden können, wenn von dem Fahrer eine Beschleunigung oder eine Bremsung gefordert wird.

13. Verfahren nach einem der vorstehenden Ansprüche, **dadurch gekennzeichnet, dass** der Übergangsschritt (E1) und der "Freilauf"-Modus jederzeit unterbrochen werden können, wenn die Bewegungsgeschwindigkeit des Fahrzeugs kleiner als eine bestimmte Geschwindigkeit wird oder wenn ein Gangwechselvorgang manuell von dem Fahrer gefordert wird.

## Claims

1. Method for automatically controlling a motor vehicle (10) for switching from a "normal" mode to a "freewheel" mode, the vehicle (10) comprising an engine (12) which is capable of supplying a drive torque to drive wheels (14) by way of an automatically controlled clutch device (18) which comprises a drive shaft (15) and a driven shaft (16), in which in "normal" mode, the drive wheels are coupled as often as possible with the engine (12) via the clutch device (18), while in "freewheel" mode, the drive wheels (14) are permanently decoupled from the engine by disengagement of the clutch device (18) to allow the engine (12) to rotate at a idle speed so long as no braking or acceleration command is given by the driver,
**characterised in that** a transition step (E1) is chronologically interposed between the "normal" mode and the "freewheel" mode during which the engine (12) is controlled automatically such that the driven shaft (16) and the drive shaft (15) rotate at the same speed without transmission of torque to the drive wheels (14).

2. Method according to claim 1, **characterised in that** during the transition step (E1), the clutch device (18) remains in the engaged position.

3. Method according to claim 1, **characterised in that** during the transition step (E1), the clutch device (18) is controlled in the disengaged position.

4. Method according to claim 1, **characterised in that** during the transition step (E1), the clutch device (18) is controlled into a biting point position.

5. Method according to any one of the preceding claims, **characterised in that** the transition step (E1) is triggered when the acceleration commanded by the driver is less than a determined value and when the drive torque transmitted to the driven shaft (16) by the clutch device (18) is less than or equal to a determined trigger torque.

6. Method according to the preceding claim, **characterised in that** the trigger torque is positive.

7. Method according to claim 5, **characterised in that** the trigger torque is zero.

8. Method according to claim 5, **characterised in that** the trigger torque is negative.

9. Method according to any one of claims 5 to 8, **characterised in that** the triggering of the transition step (E1) is postponed by a determined delay when a gear is being changed in a gearbox (22) of the vehicle.

10. Method according to any one of the preceding claims, **characterised in that** the "freewheel" mode is triggered when no acceleration nor any braking has been commanded by the driver during the transition step (E1) before the end of a determined timeout delay.

11. Method according to any one of the preceding claims, **characterised in that** the vehicle (10) is equipped with a gearbox (22) controlled automatically, the gear to be engaged being controlled according to the speed of travel of the vehicle (10) such that in case of interruption of the "freewheel" mode, no change in gear is required when the clutch device (18) passes into the engaged position.

12. Method according to any one of the preceding claims, **characterised in that** the transition step (E1) and the "freewheel" mode can be interrupted at any time when acceleration or braking is commanded by the driver.

13. Method according to any one of the preceding claims, **characterised in that** the transition step (E1) and the "freewheel" mode can be interrupted at any time when the speed of travel of the vehicle becomes less than a determined speed or when a gear change is commanded manually by the driver.
